# EUROPÄISCHE PATENTSCHRIFT

(11) **EP 2 642 165 B1**
(45) Veröffentlichungstag und Bekanntmachung des Hinweises auf die Patenterteilung: **21.02.2018**
(21) Anmeldenummer: 13158697.6
(22) Anmeldetag: 12.03.2013
(51) Int. Cl.: F16H 61/4165, F16H 61/4043, B60W 30/18

(54) **Hydrostatischer Antrieb**
Hydrostatic drive
Entraînement hydrostatique

(30) Priorität: 22.03.2012 DE 102012005824
(43) Veröffentlichungstag der Anmeldung: 25.09.2013
(73) Patentinhaber: ROBERT BOSCH GMBH, 70442 Stuttgart (DE)
(72) Erfinder: Beck, Matthias, 89231 Neu-Ulm (DE); Szeles, Botond, 89077 Ulm (DE)
(74) Vertreter: Thürer, Andreas

(56) Entgegenhaltungen:
- EP-A2- 0 309 222
- EP-A2- 1 172 588
- US-A- 4 951 466

## Beschreibung

Die Erfindung betrifft einen hydrostatischen Antrieb gemäß dem Oberbegriff des Patentanspruchs 1.

Derartige hydrostatische Antriebe werden beispielsweise bei Nutzfahrzeugen als Zusatzantrieb für eine Achse, beispielsweise die Vorderräder, verwendet, während die Hinterachse über einen konventionellen mechanischen Antriebsstrang angetrieben ist.

Ein derartiges Nutzfahrzeug mit konventionellem und hydraulischen Antriebsstrang ist beispielsweise in der DE 42 12 983 C2 erläutert. Bei dieser Lösung kann der hydraulische Antriebsstrang bei Bedarf über eine Ventilanordnung zugeschaltet werden, wobei jedem Rad der Vorderachse ein Hydromotor zugeordnet ist. Die Druckmittelversorgung erfolgt über eine Verstellpumpe. Das bekannte System ist darüber hinaus mit einem Retarder ausgeführt, über den die Bremsanlage des Nutzfahrzeugs beim Bremsen hydraulisch unterstützt ist.

In der EP 0 993 982 B1 ist ein Fahrzeug mit einem konventionellen mechanischen Antriebsstrang und einen gattungsgemäßen hydrostatischen Antrieb erläutert. Dabei ist ein Hydromotor beiden Rädern der Vorderachse zugeordnet und in Radialkolbenbauweise ausgeführt. Eine derartige Radialkolbenmaschine hat eine Vielzahl von an einem Hubring abgestützten Kolben, die jeweils einen Arbeitsraum begrenzen, wobei die Arbeitsräume aufeinander folgend mit Hochdruck- und Niederdruck verbunden werden, um den Hydromotor anzutreiben. Beim Abschalten des hydraulischen Antriebsstrangs wird dieser in einen "Free-Wheel-Modus" verstellt, bei dem die Arbeitsräume mit Tankdruck oder einen vergleichsweise niedrigen Druck beaufschlagt sind, während hubring- oder gehäuseseitig ein Speisedruck oder ein sonstiger Druck wirkt, der größer als der Tankdruck ist. Der aus dem höheren Gehäusedruck resultierende Differenzdruck bewirkt ein "Einfahren" der Kolben, so dass diese vom Hubring abheben und somit die Reibung bei abgeschaltetem hydraulischem Antriebsstrang verringert wird. Bei der Einstellung der Druckdifferenz über den Kolben ist darauf zu achten, dass die in Abheberichtung wirksame Druckdifferenz so groß ist, dass sie die Kolben gegen die bei der Rotation wirkenden Kräfte in der Abhebestellung hält.

In der US 3,811,525 ist ein hydrostatischer Antrieb gezeigt, bei dem jedem Rad ein Hydromotor zugeordnet ist. Auch diese Hydromotoren lassen sich über eine Ventilanordnung in den "Free-Wheel-Modus" umschalten, wobei dann gehäuseseitig der von einer Speisepumpe aufgebrachte Speisedruck und in den Arbeitsräumen der Tankdruck anliegt, so dass die Kolben zur Minimierung der Reibung vom Hubring abheben.

Bei den bekannten Lösungen ist darüber hinaus vorgesehen, den hydrostatischen Antrieb über eine hydraulische Kupplung zuzuschalten, die im "ausgekuppelten Zustand" zwei mit den Anschlüssen der Verstellpumpe verbundene Arbeitsleitungen miteinander verbindet (hydraulischer Bypass). Des Weiteren ist ein Ventil vorgesehen, über das das Gehäuse in der normalen Funktion mit Tankdruck beaufschlagt ist, während im vorbeschriebenen "Free-Wheel-Modus" der Speisedruck aufgeschaltet wird.

Aus der EP 0 309 222 A2 ist ein hydrostatischer Antrieb bekannt, der eine Konstantpumpe und einen verstellbaren Hydromotor, die miteinander in einem geschlossenen hydraulischen Kreislauf mit einem ersten Kreislaufzweig und mit einem zweiten Kreislaufzweig betrieben werden, sowie eine Speisepumpe aufweist. Zwischen den beiden Kreislaufzweigen ist ein verstellbares Drosselventil angeordnet, mit dem die von der Pumpe zum Hydromotor übertragene Antriebskraft gesteuert werden kann.

Ein Problem besteht darin, dass das Druckmittel bei kalten Temperaturen eine Viskosität aufweist, die unter einer für hydrostatische Antriebe zugelassenen Viskositätsgrenze liegt. Es ist daher erforderlich, das Druckmittel vor dem Losfahren des Fahrzeugs aufzuwärmen, um Beschädigungen des hydrostatischen Antriebs zu verhindern.

Aus der gattungsgemäßen US 4 951 466 A ist ein hydrostatischer Antrieb bekannt, der eine verstellbare Pumpe und einen Hydromotor, die miteinander in einem geschlossenen hydraulischen Kreislauf mit einem ersten Kreislaufzweig und mit einem zweiten Kreislaufzweig betrieben werden, sowie eine Speisepumpe aufweist. In einem Kaltstartmodus fließt von der Speisepumpe gefördertes Druckmittel über ein Stromregelventil und eine viskositätsabhängige Drossel zu einem Tank ab. Außerdem fördert im Kaltstartmodus die verstellbare Pumpe von der Speisepumpe geliefertes Druckmittel über ein an einen Kreislaufzweig angeschlossenes Druckbegrenzungsventil zum Tank. Der an dem Druckbegrenzungsventil eingestellte Druck liegt dabei an einem Anschluss des Hydromotors an. Im Kaltstartmodus ist die verstellbare Pumpe auf ein kleines Verdrängungsvolumen eingestellt.

Demgegenüber liegt der Erfindung die Aufgabe zugrunde, einen hydrostatischen Antrieb zu schaffen, der auch bei kalten Temperaturen schnell einsatzbereit ist.

Diese Aufgabe wird durch einen hydrostatischen Antrieb mit den Merkmalen des Patentanspruchs 1 gelöst.

Vorteilhafte Weiterbildungen der Erfindung sind Gegenstand der Unteransprüche.

Erfindungsgemäß hat der hydrostatischer Antrieb eine in ihrem Hubvolumen verstellbaren Pumpe und zumindest einen Hydromotor, dessen Arbeitsanschlüsse in einem geschlossenen hydraulischen Kreislauf über einen ersten Kreislaufzweig und einen zweiten Kreislaufzweig, von denen in einem ersten Betriebsmodus einer Hochdruck und einer Niederdruck führt, mit Arbeitsanschlüssen der Pumpe verbindbar sind. Der hydrostatische Antrieb hat des Weiteren eine Speisepumpe, von der über eine Speiseleitung, in der der Druck auf einen Niederdruck begrenzt ist, Druckmittel in die Kreislaufzweige einspeisbar ist. Es ist eine Ventilanordnung vorhanden, durch deren Schaltkonstellation verschiedene Betriebsmodi einstellbar sind. Außerdem weist der hydrostatische Antrieb auch eine elektronische Steuereinheit auf, mit der die Schaltkonstellationen der Ventilanordnung und gegebenenfalls auch die Verstellpumpe gesteuert werden. Erfindungsgemäß ist die elektronische Steuereinheit derart ausgelegt, dass in einem Kaltstartmodus zum Erwärmen von Druckmittel von der Verstellpumpe aus dem einen, von der Speisepumpe gespeisten Kreislaufzweig Druckmittel in den anderen Kreislaufzweig gefördert wird, wobei die Ventilanordnung derart angesteuert wird, dass das von der Verstellpumpe geförderte Druckmittel gegen einen hydraulischen Widerstand gefördert und unter Umgehung des Hydromotors zurück zum Tank geführt ist.

Die Verstellpumpe wird dabei soweit ausgeschwenkt, wie es der aktuelle Speisedruck maximal zulässt, damit eine große Menge gefördert wird. Die von der Speisepumpe geförderte und von der Verstellpumpe nicht abgenommene Menge wird beim Zurückströmen zum Tank oder auf die Saugseite der Speisepumpe vom Speisedruck auf Tankdruck abgedrosselt und damit ebenfalls erwärmt. Auch dieser Wärmeeintrag trägt somit zur Erwärmung des Druckmittels bei.

Ein erfindungsgemäßer hydrostatischer Fahrantrieb kann neben einem Aktiv-Betriebsmodus, in der er bestimmungsgemäß genutzt wird, auch einen Free-Wheeling-Modus haben, in dem der Hydromotor frei mitdreht. Es ist von Vorteil, wenn im Free-Wheeling-Modus der Speisedruck in der Speiseleitung niedriger ist als im Aktiv-Modus, da bei niedrigem Speisedruck die Energieverluste geringer als bei höherem Speisedruck sind. Der niedrigere Speisedruck im Free-Wheel-Modus ist auch deshalb von Vorteil, weil der Antrieb so ausgebildet sein kann, dass in diesem Modus einem Gehäuseanschluss, den das Motorgehäuse des Hydromotors hat und der zum Innenraum des Motorgehäuses offen ist, aus der Speiseleitung Druckmittel zufließt, um den Innenraum des Motorgehäuses mit einem niedrigen Druck zu beaufschlagen und dadurch die Kolben des Hydromotors vom Hubelement abzuheben. Durch den niedrigeren Speisedruck ist die Sicherheit hoch, dass das Motorgehäuse innen nicht mit einem zu hohen Druck beaufschlagt wird.

Zweckmäßigerweise ist der Speisedruck im Kaltstartmodus auf den Wert im Free-Wheeling-Modus abgesenkt. Damit ist die Schaltkonstellation der Ventilanordnung im Kaltstartmodus gegenüber dem Free-Wheeling-Modus nur wenig zu modifizieren und die Sicherheit ist groß, dass das Motorgehäuse nicht mit einem zu hohen Innendruck beaufschlagt wird. Zum Beispiel wird der Speisedruck im Free-Wheeling-Modus gegenüber dem normalen Speisedruck in Höhe von 20 bis 30 bar auf einen Bereich 8 bis 10 bar abgesenkt. Der Speisedruck steht üblicherweise zur Verstellung der Pumpe zur Verfügung. Bei einem niedrigeren Speisedruck ist die Verstellpumpe nicht auf ihren maximalen Schwenkwinkel verstellbar und zum Beispiel nur auf 20% ausgeschwenkt. Für ein Ausschwenken auf 100 % wäre der höhere Speisedruck notwendig.

Der Antrieb ist vorteilhafterweise auch mit einem sogenannten Stand-By-Modus ausgeführt, in dem die Ventilanordnung die Arbeitsanschlüsse des Hydromotors von Tank trennt und mit den Arbeitsanschlüssen der Pumpe verbindet und außerdem die beiden Arbeitsanschlüsse der Pumpe (10) miteinander verbindet. Im Kaltstartmodus trennt die Ventilanordnung im Kaltstartmodus die beiden Arbeitsanschlüsse der Pumpe voneinander.

In einem geschlossenen hydraulischen Kreislauf ist das Hubvolumen einer als Konstantpumpe ausgebildeten Speisepumpe üblicherweise kleiner als das maximale Hubvolumen der verstellbaren Hauptpumpe. So kann das Hubvolumen der Speisepumpe zum Beispiel 28 ccm und das maximale Hubvolumen der Verstellpumpe zum Beispiel 140 ccm sein. Üblicherweise werden die Speisepumpe und die Hauptpumpe auch mit der gleichen Drehzahl angetrieben. Selbst wenn man also im Kaltstartmodus für die Verstellpumpe einen maximalen Schwenkwinkel vorgibt, stellt sich, ob der Speisedruck nun bewusst abgesenkt wird oder nicht, ein Schwenkwinkel der Verstellpumpe ein, der wesentlich kleiner als der maximale Schwenkwinkel ist. Ist der Schwenkwinkel der Verstellpumpe nämlich so groß, dass die Verstellpumpe mehr Druckmittel ansaugt als die Speisepumpe fördert, so sinkt der Speisedruck ab. Dies führt aber zu einer Verkleinerung des Schwenkwinkels, da im Antrieb insbesondere eine Pumpe verwendet wird, bei der zum Verstellen ein umso höherer Druck notwendig ist, je größer der Schwenkwinkel wird. Das ist zum Beispiel der Fall, wenn die Verstellung gegen eine Federkraft geschieht. Wegen des kleineren Schwenkwinkels wird von der Pumpe weniger Druckmittel angesaugt. Schließlich stellt sich ein stabiler Zustand zwischen dem Schwenkwinkel und einem Speisedruck ein.

Durch die Verwendung von Logikventilen anstelle komplexer Sonderventile kann der vorrichtungstechnische Aufbau der Schaltung deutlich verringert werden, wobei die Verwendung von Logikventilen die Möglichkeit eröffnet, zusätzliche Varianten mit vergleichsweise geringem Aufwand zu realisieren, so dass der hydrostatische Antrieb auf einfache Weise an Sonderwünsche des Kunden angepasst werden kann.

Beim hydrostatischen Antrieb kann in jedem Kreislaufzweig ein Engage-Logikventil angeordnet sein, das das in einer Öffnungsstellung die Druckmittelverbindung zwischen einem Arbeitsanschluss der Pumpe und dem entsprechenden Arbeitsanschluss des Hydromotors öffnet.

Bei einem besonders bevorzugten Ausführungsbeispiel ist beiden Logikventilen in den Kreislaufzweigen gemeinsam ein Engage-Vorsteuerventil zugeordnet ist, dessen Druckanschluss mit einer den Speisedruck führenden Leitung und dessen Ausgangsanschluss mit dem Druckanschluss oder einem Tankanschluss verbindbar ist, wobei der Ausgangsanschluss des Engage-Vorsteuerventils mit den Federräumen der Logikventile in den Kreislaufzweigen und mit einem Gehäuseanschluss verbunden ist, den das Motorgehäuse des Hydromotors hat und der zum Innenraum des Motorgehäuses offen ist.

Zum Erwärmen des Druckmittels fördert die Verstellpumpe dann gegen das im Hochdruckzweig gelegene Engage-Logikventil, das vom Speisedruck in Schließrichtung beaufschlagt ist. Das heißt, das Engage-Logikventil bildet einen hydraulischen Widerstand, durch den die Erwärmung des Druckmittels beschleunigt wird.

Dieser hydraulische Widerstand lässt sich weiter vergrößern, wenn das Engage-Logikventil über den Pumpendruck in Schließrichtung vorgespannt ist. In diesem Fall würden die Engage-Logikventile geschlossen bleiben und man könnte gegen die Hochdruckventile in der Pumpe fördern (circa 400 bar), wodurch die Dauer der Aufwärmung deutlich reduziert werden könnte.

Das heißt, die Erfindung ist nicht darauf beschränkt, den hydraulischen Widerstand über die Engage-Logikventile auszubilden, sondern auch andere hydraulische Bauelemente können zur Erzeugung eines hydraulischen Widerstandes bewusst geschaltet werden, um das Druckmittel schnell auf Betriebstemperatur zu bringen.

In der den Speisedruck führenden Leitung kann ein Stromventil, insbesondere eine Düse vorgesehen sein, über die die Druckmittelströmung in Richtung zum Gehäuse des Hydromotors begrenzt ist. Das Stromventil kann auch ein Stromregelventil sein.

Bei einer Weiterbildung der Erfindung ist zwischen dem Logikventil in einem Kreislaufzweig und dem Hydromotor an jeden Kreislaufzweig mit einem ersten Anschluss ein Entlastungslogikventil, auch Unload-Logikventil genannt, angeschlossen, dessen zweiter Anschluss mit Tank verbunden ist. Durch eine Entlastung der Kolben eines Hydromotors zum Tank ist ein Betriebsmodus Free Wheeling realisierbar, in dem die Kolben nicht mehr an einer Hubkurve anliegen. Durch eine gleichzeitige Druckbeaufschlagung der Kolben vom Innenraum des Gehäuses her, werden wird in erhöhtem Maße sichergestellt, dass die Kolben in einer zurückgeschobenen Lage verbleiben. Durch Schließen dieser Unload-Logikventile erfolgt eine Umschaltung von einem "Free-Wheel-Modus" in einen "Standby"-Modus.

Über die Unload-Logikventile kann das von der Verstellpumpe geförderte erwärmte Druckmittel zurück zum Tank geführt werden.

Zur Vereinfachung des schaltungstechnischen Aufwandes ist beiden Unload-Logikventilen ein gemeinsames Unload-Vorsteuerventil zugeordnet.

Bei einem Ausführungsbeispiel der Erfindung verbindet dieses Unload-Vorsteuerventil in einer Grundstellung einen Federraum des Unload-Logikventils mit Tank und in einer Schaltstellung mit dem Kreislaufzweig, der den Hochdruck führt.

Der Hochdruck kann über ein Wechselventil abgegriffen werden.

Bei einem Ausführungsbeispiel der Erfindung hat der hydrostatische Antrieb ein Logikventil, das in einer Öffnungsstellung die beiden Kreislaufzweige (oder die Pumpenanschlüsse) in Form eines Bypasses miteinander verbindet. Diesem auch als Clutch-Logikventil benennbare Logikventil ist ein Clutch-Vorsteuerventil zugeordnet, über das ein Federraum des Clutch-Logikventils mit Hochdruck beaufschlagbar oder von Druck entlastbar ist.

Der hydrostatische Antrieb kann besonders kompakt ausgeführt sein, wenn die vorbeschriebenen Logikventile und die zugeordneten Vorsteuerventile zu einer baulichen Einheit zusammen gefasst sind. In diese Einheit kann auch ein zur Hochdruckauswahl vorhandenes Wechselventil integriert sein.

Der hydrostatische Antrieb hat eine Speisepumpe, wobei bei einem Ausführungsbeispiel in einer an den Druckanschluss der Speisepumpe angeschlossenen Speiseleitung ein Filter angeordnet ist. Diesem ist ein Druckventil zugeordnet, das von der Druckdifferenz über dem Filter beaufschlagt ist und dessen in Öffnungsrichtung wirksamer Federraum über ein Speisedrucksteuerventil zum Tank entlastbar ist. Über dieses Druckventil wird der Filter vor zu hohen Drücken geschützt, die bei verschmutztem Filter auftreten könnten. Es wird ein Teil des von der Speisepumpe geförderten Öls direkt zur Saugseite der Speisepumpe zurückgeführt werden. Bei einer Entlastung des Federraums wirkt das Druckventil wie ein Druckbegrenzungsventil. Wird der Federraum des Druckventils über eine Düse mit einer Stelle stromab des Filters verbunden und zur Entlastung des Federraums ein 2/2 Wegevorsteuerventil benutzt, so fließt bei Entlastung des Federraums ein Steuerölstrom über das Vorsteuerventil. Dieser Steuerölstrom kann zur Spülung des Pumpengehäuses benutzt werden.

Erfindungsgemäß ist stromabwärts des Filters ein Speisedruckbegrenzungsventil angeordnet, das bei einem höheren Druck zum Tank öffnet als das Druckventil am Filter bei entlastetem Federraum. Durch das Speisedruckbegrenzungsventil ist im normalen Betrieb die Höhe des Niederdrucks festgelegt.

Eine derartige Schaltung ist aus dem Stand der Technik, beispielsweise der DE 10 2004 057 740 B4 bekannt, so dass weitere Erläuterungen entbehrlich sind.

Bei einem Ausführungsbeispiel der Erfindung ist der hydrostatische Antrieb bei einem Fahrantrieb eines Fahrzeugs vorgesehen, wobei jedem Rad einer Achse ein Hydromotor vorgesehen ist. Die andere Achse wird vorzugsweise in konventioneller Weise über ein mechanisches Getriebe angetrieben.

Die Verschwenkrichtung der Verstellpumpe beim Kaltstart entspricht vorzugsweise der Schwenkrichtung bei Vorwärtsfahrt.

Ein bevorzugtes Ausführungsbeispiel der Erfindung wird im Folgenden anhand von Zeichnungen näher erläutert.

Es zeigen:
Figur 1 einen Schaltplan eines erfindungsgemäßen hydrostatischen Antriebs einer Fahrzeugachse,
Figur 2 eine vergrößerte Darstellung der Pumpeneinheit gemäß Figur 1,
Figur 3 eine vergrößerte Darstellung eines Ventilblocks gemäß Figur 1 und
Figur 4 eine vergrößerte Darstellung einer Hydromotoreinheit gemäß Figur 1.

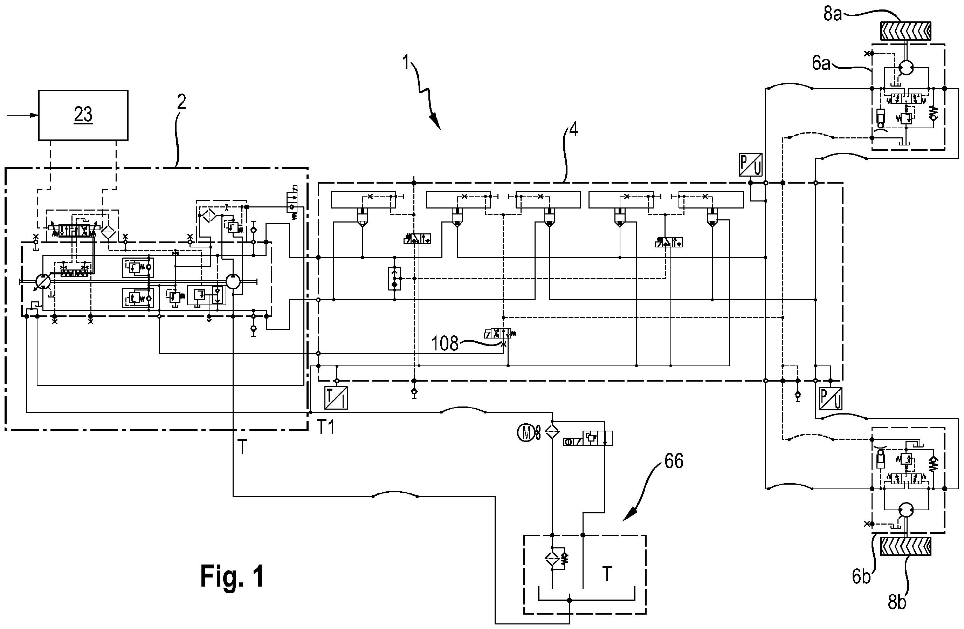

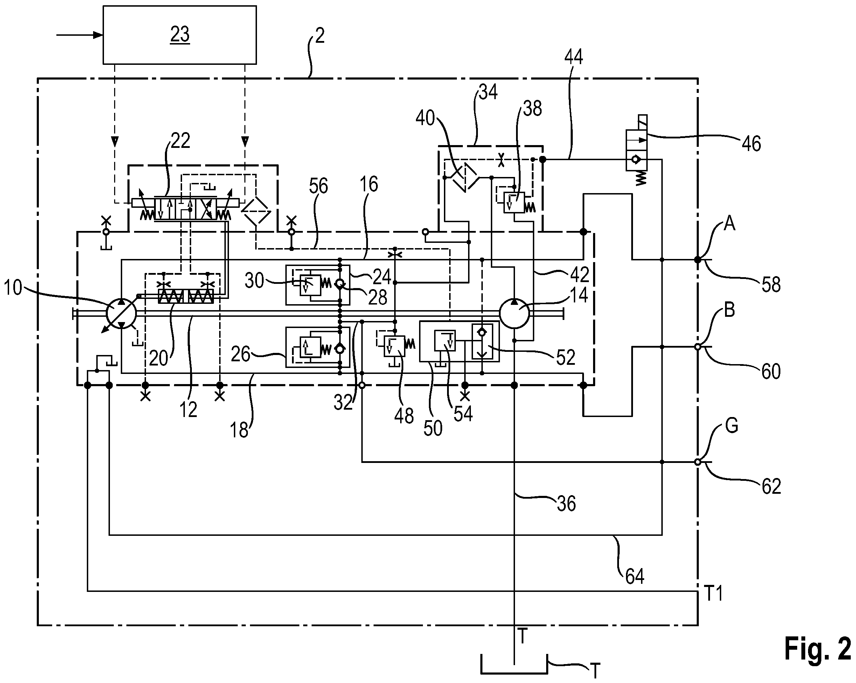

Der erfindungsgemäße hydrostatische Antrieb kann beispielsweise bei einem Lastkraftwagen angewendet werden, dessen Hinterräder über einen konventionellen mechanischen Antriebsstrang mit Verbrennungsmotor, Getriebe, Kardanwelle sowie Differential angetrieben wird. Zusätzlich ist ein hydrostatischer Antrieb vorgesehen, der beispielsweise in schwerem Gelände zugeschaltet werden kann. Gemäß dem in Figur 1 dargestellten Schaltplan hat der hydrostatische Antrieb 1 ein Pumpenaggregat 2, das vom Verbrennungsmotor angetrieben wird. Dieses Pumpenaggregat 2 versorgt über eine Ventilanordnung, im Folgenden Ventilblock 4 genannt, zwei Hydromotoreinheiten 6a, 6b, über die jeweils ein Vorderrad 8a, 8b angetrieben wird. Der in Figur 1 dargestellte hydrostatische Antrieb 1 ist als geschlossener Kreislauf ausgeführt. Die vorgenannten Bauelemente des hydrostatischen Antrieb 1 werden anhand der Figuren 2 bis 4 näher erläutert.

Figur 2 zeigt eine vergrößerte Darstellung des Pumpenaggregats 2 aus Figur 1.

Das Pumpenaggregat 2 hat eine über eine Nullstellung (kurz: über Null) verschwenkbare Verstellpumpe 10, die vom Verbrennungsmotor angetrieben wird und ein maximales Hubvolumen (Fördermenge pro Umdrehung) von zum Beispiel 140 ccm hat. Über eine Nullstellung verschwenkbar bedeutet, dass sich, wie im vorliegenden Fall, die Richtung des Druckmittelflusses durch eine Hydroeinheit in einem Pumpen- oder Motormodus unter Beibehaltung der Drehrichtung einer Triebwelle und unter Wechsel von Hochdruck- und Niederdruckanschluss umkehrt oder dass unter Beibehaltung von Hochdruck- und Niederdruckanschluss und unter Beibehaltung der Drehrichtung einer Triebwelle ein Wechsel zwischen Pumpenbetrieb und Motorbetrieb stattfindet. Der Antrieb erfolgt über eine Antriebswelle 12, die auch eine als Konstantpumpe ausgebildet Speisepumpe 14 mit einem Hubvolumen von zum Beispiel 28 ccm antreibt. Über diese wird Druckmittel aus einem Tank T (siehe auch Figur 1) angesaugt und mit einem Speisedruck von beispielsweise 20 bis 30 bar in einen Niederdruckzweig des hydrostatischen Antriebs 1 eingespeist. Bei den folgenden Erläuterungen sei angenommen, dass eine in Figur 2 oben liegende Druckleitung eine Niederdruckleitung 16 ist, während eine mit dem anderen Anschluss der Verstellpumpe 10 verbundene Druckleitung die Hochdruckleitung 18 sein soll. Je nach Förderrichtung der Verstellpumpe 10 können jedoch der Hochdruckzweig und der Niederdruckzweig wechseln.

Die Verstellung des Schwenkwinkels der Verstellpumpe 10 erfolgt mittels eines Stellzylinders 20, der über ein Pumpenregelventil 22 angesteuert wird, das als über eine Regelelektronik angesteuertes Proportionalventil ausgeführt ist. Derartige Druck- und Förderstromregelventile für Verstellpumpen sind aus dem Stand der Technik bekannt, so dass auf eine ausführliche Erläuterung verzichtet werden kann. Dem Pumpenregelventil 22 wird ein Sollwert als elektrische Größe vorgegeben und in Abhängigkeit von der Ansteuerung des Pumpenregelventils 22 ein Stellkolben des Stellzylinders 42 verstellt, wobei dieser mit einer mechanischen oder elektrischen Rückführung ausgeführt ist. Die Lage des Stellkolbens wird mechanisch oder über die Regelelektronik mit dem vorgegebenen Soll-Wert verglichen, der einem bestimmten Hubvolumen entspricht und der Stellkolben wird so lange verstellt, bis der Soll- und Ist-Wert übereinstimmen und somit unter Berücksichtigung der Drehzahl der geforderte Fördervolumenstrom eingestellt ist. Gemäß der angenommenen Förderrichtung der Verstellpumpe 10 wird das Druckmittel in die Hochdruckleitung 18 gefördert und strömt zum Verbraucher, im vorliegenden Fall zu den Hydromotoreinheiten 6a, 6b und in einem geschlossenen Kreislauf über die Niederdruckleitung 16 zum Niederdruckanschluss der Verstellpumpe 10 zurück. Hinsichtlich weiterer Einzelheiten einer derartigen Pumpensteuerung sei beispielsweise auf die DE 10 2004 061 861 B4 verwiesen.

Das Pumpenaggregat 2 hat des Weiteren zwei Speiseventile 24, 26, über die Druckmittel in den jeweiligen Niederdruckzweig eingespeist werden kann. Jedes dieser Speiseventile 24, 26 hat in an sich bekannter Weise jeweils ein zu einer Leitung 16, 18 hin öffnendes Rückschlagventil 28, zu dem ein Druckbegrenzungsventil 30 parallel geschaltet ist, das bei Überschreiten eines vorbestimmten Drucks in der zugeordneten Druckleitung (hier 18) eine Druckmittelverbindung zu jeweils anderen Druckleitung (hier 16) aufsteuert. Hinsichtlich des konkreten Aufbaus derartige Speiseventile 24, 26 kann ebenfalls auf die DE 10 2004 061 861 B4 verwiesen werden.

Die beiden Eingangsanschlüsse der Speiseventile 24, 26 sind an einen Speisekanal 32 angeschlossen, der mit einer Filtereinheit 34 verbunden ist, deren Eingangsanschluss mit dem Druckanschluss der Speisepumpe 14 verbunden ist. Ein Sauganschluss der Speisepumpe 14 ist über einen Tankanschluss T und eine Saugleitung 36 mit dem Tank T verbunden. Über die Speisepumpe 14 wird Druckmittel mit dem Speisedruck (20 bis 30 bar) beaufschlagt und über die Filtereinheit 34 und den Speisekanal 32 zum Eingang der beiden Speiseventile 24, 26 gefördert. Das niederdruckseitige Rückschlagventil 28 öffnet dann, so dass Druckmittel in den entsprechenden Niederdruckzweig gefördert wird. Der Druck im Hochdruckzweig wird über das jeweilige Druckbegrenzungsventil 30 des Speiseventils 24, 26 begrenzt, so dass bei Überschreiten dieses Maximaldrucks der Druck zur Niederdruckseite hin abgebaut werden kann.

Gemäß der Darstellung in Figur 2 ist die Filtereinheit 34 mit einem Druckventil 38 ausgeführt, das vom Druck stromaufwärts eines Filters 40 in Öffnungsrichtung und von Druck stromabwärts des Filters 40 in Schließrichtung beaufschlagt ist. In Schließrichtung wirkt des Weiteren noch eine Feder. Mit zunehmender Verschmutzung steigt der Druckabfall über dem Filter 40 an. Bei einem bestimmten Druckabfall beginnt das Druckventil 38 eine Bypass-Leitung 42 zur Saugleitung 36 aufzusteuern, so dass der Filter vor zu hohen Drücken geschützt ist. Der in Schließrichtung wirksame Druck stromabwärts des Filters 40 wird über einen Steuerkanal 44 abgegriffen, in dem ein Speisedrucksteuerventil 46 angeordnet ist, das über eine Feder in eine Schließstellung vorgespannt ist und über einen Schaltmagneten in eine Öffnungsstellung bringbar ist, in der der Steuerkanal 44 über das Pumpengehäuse zum Tank T hin entlastet ist. Wie in der Darstellung gemäß den Figuren 1 und 2 angedeutet, ist der Ausgang des Speisedrucksteuerventils 46 an eine Leckageleitung 64 angeschlossen, die über das Pumpengehäuse der Verstellpumpe 10 mit dem Tank T verbunden ist. Die Anbindung ans Pumpengehäuse ist in Figur 2 mit den Anschlüssen T1, T2 gekennzeichnet. Durch Schalten des Speisedruckssteuerventils 46 in seine Öffnungsstellung kann die in Schließrichtung wirksame Steuerfläche des Druckventils 38 entlastet werden, so dass dieses als Druckbegrenzungsventil wirkt, das den Druck stromaufwärts des Filters 40 begrenzt. Stromabwärts des Filters 40 ist im Speisekanal 32 ein Speisedruckbegrenzungsventil 48 vorgesehen, das erfindungsgemäß bei einem höheren Druck (beispielsweise 20 bis 30 bar) öffnet als das Differenzdruckventil 38 in der vorbeschriebenen Druckbegrenzungsfunktion. Dieses öffnet dann beispielsweise bei Umschalten des Speisedrucksteuerventils die Druckmittelverbindung zum Tank T bei einem Druck, der unterhalb des Drucks des Speisedruckbegrenzungsventils 48 beispielsweise bei etwa 5 bis 7 bar liegt. Der Speisedruck ist dann entsprechend verringert. Die Funktionsweise und der konkrete Aufbau einer derartigen Filtereinheit 34 mit zwei auf unterschiedliche Werte eingestellten Druckbegrenzungsventilen ist beispielsweise in der DE 10 2004 057 740 B4 erläutert.

Das Pumpenaggregat hat des Weiteren eine Druckabschneideventileinheit 50, über die der Druck im Hochdruckzweig mittels eines Wechselventils 52 abgegriffen und in einen Steuerraum eines Druckabschneideventils 54 geführt wird, das bei Überschreiten eines vorbestimmten Maximaldrucks eine Steuerleitung 56 gedrosselt mit Tank verbindet, so dass die Verstellpumpe 10 in Richtung eines geringeren Fördervolumenstroms verstellt wird. Hinsichtlich weiterer Einzelheiten einer derartigen Druckabschneideventileinheit 50 kann ebenfalls auf die DE 10 2004 061 861 B4 verwiesen werden.

Das Pumpenaggregat 16 hat zwei Arbeitsanschlüsse A, B, die über Arbeitsleitungen 58, 60 mit dem im Folgenden noch näher erläuterten Ventilblock 4 verbunden sind. Das Pumpenaggregat 16 hat des Weiteren einen Speiseanschluss G, der über einen internen Kanal mit dem Speisekanal 32 verbunden ist und an den eine Speiseleitung 62 angeschlossen ist. Die Saugleitung 36 ist über einen Tankanschluss T mit dem Tank T verbunden. Eine an den Ausgang des Speisedrucksteuerventils 46 angeschlossene Leckage-Leitung 64 ist über eine in Figur 1 dargestellte Kühl-/Filtereinheit 66 mit dem Tank T verbunden, so dass aus dem geschlossenen Kreislauf abgezogenes Druckmittel gekühlt und gefiltert wird und dann wieder über die Speisepumpe 14 in den geschlossenen Kreislauf zurück gefördert werden kann.

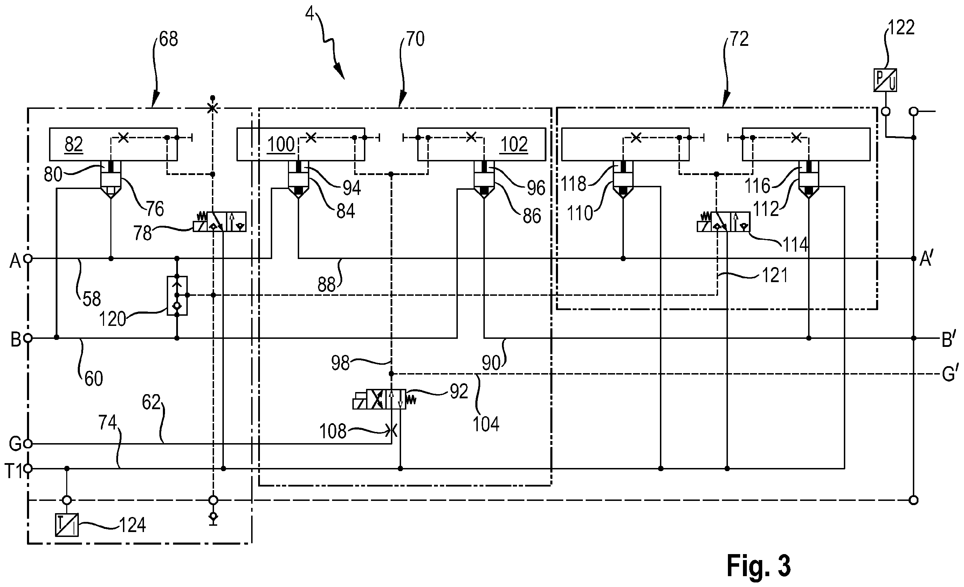

Figur 3 zeigt den Ventilblock gemäß Figur 1 in vergrößerter Darstellung. Dieser setzt sich im Prinzip aus drei Ventileinrichtungen zusammen, die im Folgenden als Clutch-Ventileinrichtung 68, als Engage-Ventileinrichtung 70 und als Unload-Ventileinrichtung 72 bezeichnet werden. Erfindungsgemäß sind diese Ventileinrichtungen im Prinzip durch miteinander verschaltete vorgesteuerte Logikventile ausgebildet, durch die die eingangs beschriebenen Funktionen der Sonderventile beim Stand der Technik realisiert sind.

Gemäß der Darstellung in Figur 3 hat der Ventilblock Anschlüsse A, B, G und T1, die mit den entsprechenden Anschlüssen des Pumpenaggregats 2 verbunden sind. An die beiden Arbeitsanschlüsse A, B sind die vorbeschriebenen Arbeitsleitungen 58, 60 angeschlossen, während der Speiseanschluss G mit der Speiseleitung 62 in Druckmittelverbindung steht. Der Leckage-Anschluss T1 ist mit einem Leckage- oder Rücklaufkanal 74 verbunden.

Die Clutch-Ventileinrichtung 68 hat ein Clutch-Logikventil 76, dessen Anschluss A an die Arbeitsleitung 58 und dessen anderer Anschluss B an die andere Arbeitsleitung 60 angeschlossen ist. Dem Clutch-Logikventil 76 ist ein Clutch-Vorsteuerventil 78 zugeordnet, über das ein Federraum 80 des Clutch-Vorsteuerventils 76, im Folgenden C-Vorsteuerventil genannt, in einer federvorgespannten Grundposition mit dem Rücklaufkanal 74 und in einer bei Ansteuerung eines ziehenden Schaltmagneten eingenommenen Schaltposition mit dem Hochdruckzweig verbindbar ist, so dass dann der Hochdruck im Federraum 80 wirksam ist. Der Hochdruck wird über ein Wechselventil 120 von den Arbeitskanälen 58, 60 abgegriffen. Der Ausgang des C-Vorsteuerventils 78 ist über eine Anschlussplatte 82 des C-Logikventils 76 mit dem Federraum 80 verbunden.

In der dargestellten Grundposition wirkt somit im Federraum 80 der Tankdruck, so dass das C-Logikventil 76 durch den Druck in den Arbeitsleitungen 58, 60, insbesondere durch den gemäß den Vorgaben in der Arbeitsleitung 60 wirksamen Hochdruck in eine Öffnungsstellung gebracht wird und die beiden die Pumpenanschlüsse verbindenden Arbeitsleitungen 58, 60 über das C-Logikventil 76 kurzgeschlossen sind. Die Druckmittelversorgung zu den Hydromotoren ist somit unterbrochen.

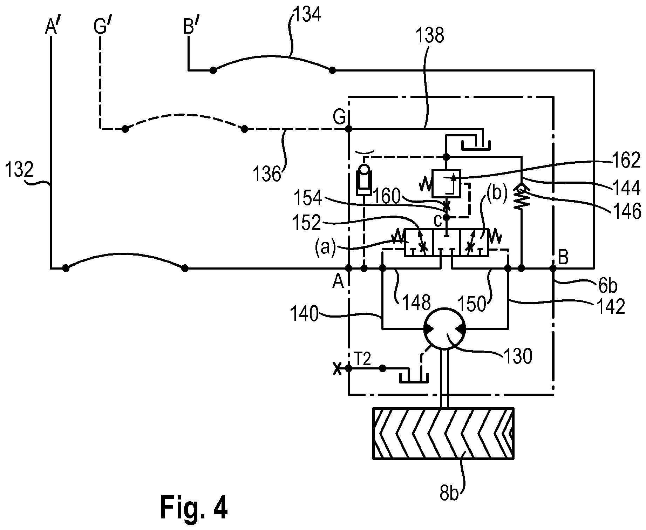

Die Engage-Ventileinrichtung 70 hat zwei Engage-Logikventile 84, 86, im Folgenden E-Logikventile 84, 86 genannt. Die radialen Anschlüsse der E-Logikventile 84, 86 sind an die Arbeitsleitung 58 bzw. 60 angeschlossen. Die beiden anderen Anschlüsse der beiden E-Logikventile 84, 86 münden in einen Arbeitskanal 88 bzw. 90. Beiden Engage-Logikventilen 84, 86 ist ein E-Vorsteuerventil 92 zugeordnet, das im dargestellten Ausführungsbeispiel als 4/2-Wegeventil ausgeführt ist und über eine Feder in eine Öffnungsstellung vorgespannt ist, in der Federräume 94, 96 der E-Logikventile 84 bzw. 86 mit der Speiseleitung 62 verbunden sind, so dass in den Federräumen 94, 96 der Speisedruck wirkt. Durch Umschalten des E-Vorsteuerventils 92 werden die Federräume 94, 96 mit dem Rücklaufkanal 74 verbunden und somit druckentlastet. Der Ausgangsanschluss des E-Vorsteuerventils 92 ist über einen Steuerkanal 98 und Anschlussplatten 100, 102 mit dem jeweiligen Federraum 94 bzw. 96 verbunden. Vom Steuerkanal 98 zweigt ein Kanal 1004 ab, der mit einem Gehäuseanschluss G der Hydromotoreinheiten 6a, 6b, (siehe Figur 4) verbunden ist.

Je nach Schaltstellung des E-Vorsteuerventils 92 ist also der Kanal 104 mit der Speiseleitung 62 oder mit dem im Rücklaufkanal 74, in dem Tankdruck herrscht, verbunden.

Im Bereich zwischen dem Anschluss G des Ventilblocks und dem E-Vorsteuerventil 92 ist eine Düse 108 vorgesehen, über die in der dargestellten Grundposition des E-Vorsteuerventils 92 der Druckmittelvolumenstrom zum Gehäuse der Hydromotoreinheiten 6a, 6b begrenzt wird.

In Darstellung gemäß Figur 3 befindet sich die E-Vorsteuerventileinheit 92 in ihrer Grundposition, die sie beim "Free-Wheel-Modus" und in der der Kanal 104 mit der Speiseleitung 62 verbunden ist. Die beiden E-Logikventile 84, 86 werden durch den aktuellen Speisedruck, der auf die große, rückwärtige Steuerfläche und, da das Clutch-Logikventil 76 offen ist, die kleinere, vordere Ringfläche des jeweiligen Logikventils 84, 86 wirkt, in ihrer Schließposition gehalten, so dass die Druckmittelverbindung vom Arbeitskanal 88 zur Arbeitsleitung 58 und vom Arbeitskanal 90 zur Arbeitsleitung 60 unterbrochen ist. Die zentrale vordere Steuerfläche der Logikventil 84, 86 ist im Free Wheeling Modus zum Tank entlastet, wie aus der weiteren Beschreibung noch hervorgehen wird.

Die Unload-Ventileinrichtung 72 hat zwei vorgesteuerte Unload-Logikventile 110, 112 (U-Logikventil), deren axiale Anschlüsse mit dem Arbeitskanal 88 bzw. 90 verbunden ist und deren radiale Ausgangsanschlüsse mit dem Rücklaufkanal 74 verbunden sind. Beiden U-Logikventilen 110, 112 ist gemeinsam ein Unload-Vorsteuerventil 114 zugeordnet, das beim dargestellten Ausführungsbeispiel als 3/2-Wegeventil ausgeführt ist und in seiner federvorgespannten Grundposition die beiden Federräume 116, 118 mit dem Rücklaufkanal 74 verbindet. Durch Umschalten des U-Vorsteuerventils 114 werden die Federräume 116, 118 mit dem Druck im Hochdruckzweig beaufschlagt, der über das Wechselventil 120 an den Arbeitsleitungen 58, 60 abgegriffen wird. Der Ausgang dieses Wechselventils 120 ist über eine HD-Steuerleitung 121 mit dem Eingang des U-Vorsteuerventils 114 verbunden.

Im dargestellten "Free-Wheel-Modus" sind die Federräume 116, 118 in der Grundposition des U-Vorsteuerventils 114 mit dem Rücklaufkanal 74 verbunden und somit druckentlastet. Die U-Logikventile 110, 112 können daher durch den in Öffnungsrichtung wirksamen Druck aufgesteuert werden, so dass die beiden Arbeitskanäle 88, 90 mit dem Tank verbunden sind und somit in den Arbeitsräumen der Hydromotoren entsprechend Tankdruck wirkt, während gehäuseseitig der Speisedruck wirksam ist und somit die Kolben vom Hubring abheben. Der Tankdruck in den Arbeitskanälen 88 und 90 steht auch an den zentralen, vorderen Steuerflächen der E-Logikventile 84, 86 an.

Gemäß den vorstehenden Ausführungen steuert das C-Logikventil 76 einen Bypass zwischen den Arbeitsleitungen 58, 60. Dieses C-Logikventil 76 wird so lange offen gehalten, bis eine hinreichende Synchronisation der konventionell angetriebenen Hinterräder und der Vorderräder gewährleistet ist, um unerwartete Druckspitzen zu vermeiden. Nach dem Schließen des C-Logikventils 76 ist der Kurzschluss zwischen den Arbeitsleitungen 58, 60 aufgehoben, so dass an den Hydromotoren ein Drehmoment wirksam wird. An den Messpunkt MT ist ein Temperatursensor 124 angeordnet, der die Temperatur des Druckmittels im Rücklaufkanal 74 erfasst.

Über die E-Ventileinrichtung 70 wird die Verbindung der Arbeitsleitungen 58, 60 zu den Hydromotoreinheiten 6a, 6b gesteuert. Darüber hinaus steuert die E-Ventileinrichtung 70 den "Free-Wheel-Modus" bei dem die Kolben der Hydromotoren, wie vorstehend erläutert, vom Hubring abheben.

Über die U-Ventileinrichtung 72 wird die Druckmittelverbindung der Hydromotoren zum Tank gesteuert. Die Drücke in den Arbeitskanälen 88, 90 können über Drucksensoren 122 erfasst werden, von denen Figur 1 zwei und in der Darstellung gemäß Figur 3 beispielhaft lediglich einer dargestellt ist.

Die Druckmittelversorgung der Hydromotoreinheiten 6a, 6b erfolgt über die Arbeitsanschlüsse A', B' sowie den Anschluss G', des Ventilblocks 4.

Die Funktion der Hydromotoreinheiten 6a, 6b wird beispielhaft anhand von Figur 4 erläutert, die die Hydromotoreinheit 6b aus Figur 1 zeigt.

Die Hydromotoreinheit 6a hat einen Hydromotor 130, der als nicht verstellbare Hydromaschine ausgeführt ist.

Wie erläutert, ist der Hydromotor beispielsweise als Radialkolbenmaschine, mit einem Radialkolbentriebwerk ausgeführt, wobei eine Vielzahl von Kolben an einem außen liegenden Hubring abgestützt sind. Die Radialkolbenmaschine kann auch mit einem innen liegenden Hubring ausgeführt sein. Da der Aufbau derartiger Radialkolbenmaschinen hinlänglich bekannt ist, kann unter Verweis auf den Stand der Technik auf weitere Erläuterungen verzichtet werden. Die vorbeschriebenen Arbeitsanschlüsse A', B' sind über Anschlussleitungen 132, 134 mit den entsprechenden Anschlüssen A, B der Hydromotoreinheit 6b verbunden. Diese hat des Weiteren einen Gehäuseanschluss G, der über eine Leitung 136 mit dem Anschluss G' des Ventilblocks 4 verbunden ist. Wie bereits vorstehend erläutert, ist an den Gehäuseanschluss G ein Kanal 138 angeschlossen, der sich in den Innenraum des Motorgehäuses öffnet. Das heißt, die Kolben des Radialkolbentriebwerks sind durch den Druck im Kanal 138 in Richtung eines Abhebens vom Hubring beaufschlagt, wie dies in den Figuren 1 und 4 angedeutet ist. Je nach Schaltposition des Engage-Vorsteuerventils 92 kann dieser Druck dem Tankdruck oder einem erhöhten Druck entsprechen. Die beiden Anschlüsse des Hydromotors 130 sind über einen Arbeitskanal 140, 142 mit den Anschlüssen A, B verbunden.

Vom Kanal 138 zweigt ein Freewheelkanal 144 ab, der den Gehäuseinnenraum mit dem Arbeitskanal 142 verbindet. In dem Freewheelkanal 144 ist ein federvorgespanntes Rückschlagventil 146 vorgesehen, dessen Feder einem Druckäquivalent von zum Beispiel 3bar entspricht und das zum Arbeitskanal 142 hin öffnet. Zum Öffnen dieses Rückschlagventils 146 muss der stromaufwärts des Rückschlagventils wirksame Druck um etwa 3 bar höher als der an der Rückseite des Rückschlagventils 146 wirkende Druck sein. Das Rückschlagventil 146 sorgt also dafür dass der Druck im Gehäuseinnenraum nicht unter 3 bar abfällt. Mit diesem Druck werden die Kolben im Free Wheeling Modus in Richtung Einfahren in die Zylinder beaufschlagt.

Von den beiden Arbeitskanälen 140, 142 zweigt jeweils ein Kanal 148, 150 ab, die zu zwei Eingangsanschlüssen eines Spülventils 152 geführt sind.

Dieses ist als 3/3-Wegeventil ausgeführt und hat einen Ausgangsanschluss C, an den ein Verbindungskanal 154 angeschlossen ist, der stromaufwärts des Rückschlagventils 146 in den Freewheelkanal 144 einmündet.

Das Spülventil 152 hat eine federzentrierte Mittelstellung, in der die drei Anschlüsse gegeneinander abgesperrt sind. Der Druck in den Kanälen 148, 150 wird jeweils über Steuerkanäle 156, 158 abgegriffen und zu zwei entgegengesetzt liegenden Steuerflächen des Spülventils geführt, so dass das Spülventil durch die in den Arbeitskanälen 140, 142 wirksame Druckdifferenz in Richtung einer Schaltstellung a oder b verstellt wird. Im Verbindungskanal 154 ist eine Drossel 160 angeordnet. Stromabwärts dieser Drossel 160 ist ein Druckhalteventil 162 vorgesehen, das über eine Feder in eine Sperrstellung vorgespannt ist und das durch den Druck stromaufwärts der Drossel 160 in Richtung einer Öffnungsstellung beaufschlagt ist.

Dieses Druckhalteventil 162 öffnet erst dann, wenn der Druck im Verbindungskanal 154 und somit der niedrigere Druck aus den beiden Arbeitskanälen 140, 142 einen der Feder des Druckhalteventils 162 entsprechenden Schwellwert überschritten hat. Der prinzipielle Aufbau eines derartigen Spülventils ist in der EP 1 443 220 B1 erläutert, wobei bei dieser Variante noch ein Druckabschaltventil vorgesehen ist.

Bei einem Kaltstart des hydrostatischen Fahrantriebs wird zum Erwärmen des Druckmittels die Verstellpumpe 10 wird deren Schwenkwinkel über die Steuereinheit 23 zum Beispiel auf den maximalen Sollwert eingestellt. Da das Hubvolumen der Speisepumpe wesentlich kleiner ist als das maximale Hubvolumen der Verstellpumpe 10 stellt sich, wie weiter oben schon dargelegt, von selbst ein Schwenkwinkel der Verstellpumpe ein, der wesentlich kleiner als der maximale Schenkwinkel ist. Eine bewusste Absenkung des Speisedrucks wie im Free-Wheeling-Modus ist dann für die Praxis weitgehend ohne Auswirkung, da der Speisedruck wegen des Unterschieds zwischen dem Hubvolumen der Speisepumpe 14 und dem maximalen Hubvolumen der Verstellpumpe ohnehin absinken würde. Der bewusst eingestellte niedrigere Speisedruck muss natürlich noch hoch genug sein, um die Pumpe verstellen zu können. Die bewusste Absenkung bringt es mit sich, dass einige Ventile im Kaltstartmodus und im Free-Wheeling-Modus in gleicher Weise angesteuert werden können. Die bewusste Erniedrigung des Speisedrucks erhöht außerdem die Sicherheit, dass das Motorgehäuse innen nicht mit einem zu hohen Druck beaufschlagt wird.

Gleichzeitig wird zum Erwärmen das Clutch-Logikventil 76 in Richtung seiner Schließstellung vorgespannt, so dass der Bypass zwischen den Arbeitsleitungen 58, 60 geschlossen ist. Hierzu wird das C-Vorsteuerventil 78 aus seiner Grundposition umgeschaltet, so dass im Federraum 80 der über das Wechselventil 120 abgegriffene Hochdruck anliegt.

Die beiden E-Logikventile 84, 86 sind beim Erwärmen in der in Figur 3 dargestellten Position über das E-Vorsteuerventil 92 in Richtung ihrer Schließposition mit einem Druck beaufschlagt, der sich stromab der Düse 108 einstellt. Stromauf der Düse 108 steht der niedrigere Speisedruck an. Dieser ist über das Druckventil 38 und das Speisedrucksteuerventil 46 auf einen geringeren Wert (beispielsweise 8 bis 10 bar) eingestellt beziehungsweise aufgrund des Verhaltens der Verstellpumpe niedriger, als es im normalen Betrieb der Fall ist (20 bis 30 bar Speisedruck). Zu der bewussten Reduzierung des Speisedrucks wird das Speisedrucksteuerventil 46 in seine Öffnungsstellung umgeschaltet, so dass das Druckventil 38 in Schließrichtung druckentlastet ist und somit den Speisedruck auf den dem Druckäquivalent seiner Feder entsprechenden Wert begrenzt, wobei ein Steuerölstrom über das geöffnete Speisedrucksteuerventil 46, die Leckageleitung 64 und das Gehäuse der Pumpe 10 zum Tank T hin abströmt und dabei ebenfalls erwärmt wird. Der Druck nach der Düse 108 wirkt dann auf die E-Logikventile 84, 86 in Schließrichtung, während auf die Ringfläche des einen E-Logikventils der Hochdruck und auf die Ringfläche des anderen E-Logikventils der Niederdruck (Speisedruck) wirkt. Die Verstellpumpe fördert also gegen das hochdruckseitig angeordnete, in Schließrichtung vorgespannte E-Logikventil 84 oder 86 (je nach Förderrichtung), wobei dieses eine Druckmittelströmung in Richtung zu den beiden U-Logikventilen 110, 112 zulässt. Diese sind ebenfalls in die in Figur 3 dargestellte Position vorgespannt, wobei sich das U-Vorsteuerventil 114 in seiner dargestellten Grundposition befindet, in der die Federräume 116, 118 jeweils zum Tank hin druckentlastet sind. Das im Hochdruckzweig gelegene U-Logikventil 110, 116 wird durch den auf seine Stirnfläche wirkenden Druck aufgesteuert, entsprechend wird das niederdruckseitige U-Logikventil in Öffnungsrichtung vom Niederdruck (Speisedruck) beaufschlagt, so dass das Druckmittel über das jeweilige U-Logikventil 110, 112 zum Tank T hin abströmen kann. Zwischen dem auf
gesteuerten E-Logikventil 84 oder 86 und dem entsprechenden U-Logikventil baut sich dabei eine Druck auf, der notwendig ist , um das U-Logikventil durch Druckbeaufschlagung an der zentralen, vorderen Stirnfläche gegen die Feder zu öffnen. Dieser Druck wirkt auch auf die zentrale Stirnfläche des geöffneten E-Logikventils. Am radialen Anschluss dieses E-Logikventils stellt sich ein Druck ein, der so groß ist, dass die durch ihn an der Ringfläche des E-Logikventils erzeugte Druckkraft zusammen mit der an der zentralen vorderen Stirnfläche erzeugten Druckkraft das E-Logikventil gegen die Federkraft und die durch den Speisedruck an der hinteren Stirnfläche erzeugte Druckkraft offen hält. Durch den vergleichsweise hohen hydraulischen Widerstand des im Hochdruckzweig gelegenen E-Logikventils 84 beziehungsweise 86 wird das Druckmittel sehr schnell erwärmt und in den gewünschten Viskositätsbereich gebracht.

Die Düse 108 hat in erster Linie die Funktion, den Zufluss von Druckmittel in die Motorengehäuse zu begrenzen. Sie könnte deshalb auch in der Leitung 104 angeordnet sein. Dann würden die E-Ventile im Kaltstartmodus mit dem erniedrigten Speisedruck in Schließrichtung beaufschlagt werden. Es würde sich ein höherer Hochdruck einstellen, weil der erniedrigte Speisedruck höher als der Druck stromab der Düse 108 ist. Einer Düse in der Leitung 104 könnte ein zum Ventil 92 hin öffnendes Rückschlagventil parallel geschaltet sein, um nach einem Umschalten des Ventils 92 eine schnell eine große menge Öl abfließen zu lassen.

Wie eingangs erläutert, kann die Erwärmung noch beschleunigt werden, indem die beiden E-Logikventile 84, 86 durch den Hochdruck in Schließrichtung beaufschlagt werden.

### Zusammenfassend kann man festhalten:

Im Kaltstartmodus wird der Ölstrom erwärmt, der über die Speisepumpe 14, über den Filter 40, über die Verstellpumpe 10 sowie über ein E-Logikventil und ein U-Logikventil zum Tank fließt. Es wird weiterhin der Ölstrom erwärmt, der über die Speisepumpe 14, über den Filter 40, die Düse zwischen dem Ausgang des Filters 40 und dem Federraum des Ventils 38 und das Ventil 46 zum Tank fließt. Es wird, sofern hier Öl fließt, außerdem ein Ölstrom erwärmt, der über die Speisepumpe 14, über das Filter 40, über die Düse 108, über das Ventil 92 und über die Gehäuse der Hydromotoren 6a, 6b, über die Rückschlagventile 146, über einen Arbeitsanschluss eines Hydromotors und über ein U-Logikventil zum Tank fließt.
Ist der durch das Ventil 38 bei entlastetem Federraum vorgegebene, maximale erniedrigte Speisedruck nicht so groß, um die die Verstellpumpe 10 soweit ausschwenken zu können, dass diese die ganze von der Speisepumpe eingespeiste Menge fördern kann, so fließt über das Ventil 38 eine Restmenge zurück zum Saugeingang der Speisepumpe 14. Auch diese Menge wird dabei erwärmt und vermischt sich mit der weiteren, von der Speisepumpe aus dem Tank angesaugten Ölmenge, so dass auch ein Ölfluss über das Ventil 38 zum Wärmeeintrag in die Gesamtölmenge beiträgt.

Wie erläutert, ist in der in Figur 1 dargestellten Grundposition des Ventilblocks 4 der "Free-Wheel-Modus" eingestellt. Das heißt, über die C-Ventileinrichtung 68 sind die Arbeitsleitungen 58, 60 kurzgeschlossen. Das E-Vorsteuerventil 92 schaltet den Speisedruck in das Gehäuse des Hydromotors 130 durch. Die Arbeitsräume des Hydromotors sind über die U-Ventileinrichtung 72 mit dem Tank verbunden. Die Kolben des Hydromotors 130 sind somit im Sinne eines Abhebens vom Hubring beaufschlagt. Das Speicherdrucksteuerventil 46 ist dabei in seine Öffnungsstellung geschaltet, so dass der Speisedruck auf den am Druckventil 38 eingestellten Wert verringert ist.

Wie erläutert, sind die beiden Arbeitskanäle 140, 142 zum Tank T hin entlastet, so dass an der Rückseite des Rückschlagventils 146 der Tankdruck anliegt. Der Druck stromaufwärts des Rückschlagventils wird dem entsprechend auf 3 bar oder genauer gesagt den dem Druckäquivalent der Feder des Rückschlagventils 146 entsprechenden Druck begrenzt. Dieser Druck ist hinreichend, um die Kolben des Hydromotors 130 gegen die Fliehkraft in ihrer eingefahrenen Position zu halten. In diesem "Free-Wheel-Modus" ist die Antriebswelle 12 angetrieben, so dass entsprechend auch der Speisedruck zur Verfügung steht. Die Verstellpumpe 10 kann dabei zurückgefahren werden.

Beim Zuschalten des hydrostatischen Antriebs wird zunächst das E-Vorsteuerventil 92 umgeschaltet, so dass gehäuseseitig der Tankdruck wirksam ist und die Kolben sich wieder an den Hubring anlegen können. Die E-Logikventile 84, 86 öffnen durch die Entlastung im Federraum 94, 96 und aufgrund des in Öffnungsrichtung wirksamen Drucks. Die Anschlüsse A, B des Pumpenaggregats 2 sind dabei jedoch weiterhin über die C-Logikventileinrichtung kurzgeschlossen. In entsprechender Weise sind die Anschlüsse A, B der Hydromotoreinheiten 6a, 6b über die U-Ventileinrichtung 72 mit dem Tank verbunden.

In einer folgenden Sequenz wird dann der Schwenkwinkel der Verstellpumpe 10 so eingestellt, dass der Förderstrom der Pumpe dem Schluckvolumenstrom der beiden Hydromotoreinheiten 6a, 6b plus einer vorbestimmten Schluckvolumenstromdifferenz entspricht. In der Folge wird dann das U-Vorsteuerventil 114 umgeschaltet, so dass die Anschlüsse A, B, der Hydromotoreinheiten 6a, 6b mit den Arbeitskanälen 88, 90 verbunden sind und somit die Hydromotoren an das hydraulische Netz der Pumpe angeschlossen sind. Die endgültige Zuschaltung erfolgt dann durch Umschalten der C-Ventileinrichtung 68 in ihre Sperrstellung.

Das Abschalten des hydrostatischen Antriebs erfolgt dann in entsprechender Weise.

Offenbart ist ein hydrostatischer Antrieb mit einem geschlossenen Kreislauf, wobei zumindest ein Hydromotor über eine Verstellpumpe mit Druckmittel versorgt wird. Der Antrieb hat eine Speisepumpe, wobei zum Erwärmen des Druckmittels die Verstellpumpe von der Speisepumpe mit Druckmittel versorgt wird und dieses gegen einen vorbestimmten hydraulischen Widerstand zum Tank fördert.

## Patentansprüche

1. Hydrostatischer Antrieb mit einer in ihrem Hubvolumen verstellbaren Pumpe (10), mit zumindest einem Hydromotor (6a, 6b), dessen Arbeitsanschlüsse in einem geschlossenen hydraulischen Kreislauf über einen ersten Kreislaufzweig und einen zweiten Kreislaufzweig, von denen in einem ersten Betriebsmodus einer Hochdruck und einer Niederdruck führt, mit Arbeitsanschlüssen der Pumpe (10) verbindbar sind,
mit einer Speisepumpe(14), von der über eine Speiseleitung, in der der Druck auf einen Niederdruck begrenzt ist, Druckmittel in die Kreislaufzweige einspeisbar ist,
mit einer Ventilanordnung (4), durch deren Schaltkonstellation verschiedene Betriebsmodi einstellbar sind,
und mit einer elektronischen Steuereinheit (23),
**dadurch gekennzeichnet, dass** die elektronische Steuereinheit (23) derart ausgelegt ist, dass in einem Kaltstartmodus zum Erwärmen von Druckmittel von der Verstellpumpe (10) aus dem einen, von der Speisepumpe (14) gespeisten Kreislaufzweig Druckmittel in den anderen Kreislaufzweig gefördert wird, wobei die Verstellpumpe (10) soweit ausgeschwenkt ist, wie es der aktuelle Speisedruck zulässt und wobei die Ventilanordnung (4) derart angesteuert wird, dass das von der Verstellpumpe (10) geförderte Druckmittel gegen einen hydraulischen Widerstand gefördert und unter Umgehung des Hydromotors (130) zurück zum Tank geführt ist.

2. Hydrostatischer Antrieb nach Patentanspruch 1, wobei in einem Betriebsmodus (Free-Wheeling-Modus) die Ventilanordnung (4) die Arbeitsanschlüsse von Pumpe (10) und Hydromotor (6a, 6b) voneinander trennt, die Arbeitsanschlüsse der Pumpe (10) miteinander verbindet und die Arbeitsanschlüsse des Hydromotors (6a, 6b) mit einem Tank verbindet und in diesem Betriebsmodus einem Gehäuseanschluss, den das Motorgehäuse des Hydromotors (6a, 6b) hat und der zum Innenraum des Motorgehäuses offen ist, aus der Speiseleitung Druckmittel zufließt, um den Innenraum des Motorgehäuses mit einem niedrigen Druck zu beaufschlagen, wobei in einem weiteren Betriebsmodus (Aktiv-Modus) die Ventilanordnung (4) die beiden Arbeitsanschlüsse der Pumpe (10) voneinander und die beiden Arbeitsanschlüsse des Hydromotors (6a, 6b) von Tank trennt und den einen Arbeitsanschluss der Pumpe (10) mit dem einen Arbeitsanschluss des Hydromotors (6a, 6b) und den anderen Arbeitsanschluss der Pumpe (10) mit dem anderen Arbeitsanschluss des Hydromotors (6a, 6b) verbindet und wobei im Kaltstartmodus und im Free-Wheeling-Modus der Speisedruck in der Speiseleitung auf einen niedrigeren Wert begrenzt ist als im Aktiv-Modus.

3. Hydrostatischer Antrieb nach Patentanspruch 2, wobei im Free-Wheeling-Modus dem Innenraum des Motorgehäuses Druckmittel über ein Stromventil, insbesondere über eine Düse (108) zufließt und zwischen dem Innenraum und einem Arbeitsanschluss des Hydromotors (6a, 6b) ein zu dem Arbeitsanschluss hin öffnendes Rückschlagventil (146) angeordnet ist.

4. Hydrostatischer Antrieb nach Patentanspruch 2 oder 3, wobei die Ventilanordnung (4) in einem anderen Betriebsmodus (Stand-By-Modus) die Arbeitsanschlüsse des Hydromotors von Tank trennt und mit den Arbeitsanschlüssen der Pumpe (10) verbindet und außerdem die beiden Arbeitsanschlüsse der Pumpe (10) miteinander verbindet und wobei die Ventilanordnung (4) im Kaltstartmodus die beiden Arbeitsanschlüsse der Pumpe(10) voneinander trennt.

5. Hydrostatischer Antrieb nach einem der Patentansprüche 1 bis 4, wobei in jedem Kreislaufzweig ein 2-Wege-Einbauventil (Logikventil) (84, 86) angeordnet ist, das in einer Öffnungsstellung die Druckmittelverbindung zwischen einem Arbeitsanschluss der Pumpe (10) und dem entsprechenden Arbeitsanschluss des Hydromotors (130) öffnet, wobei beiden Logikventilen (84, 86) in den Kreislaufzweigen gemeinsam ein Engage-Vorsteuerventil (92) zugeordnet ist, dessen Druckanschluss mit einer den Speisedruck führenden Leitung und dessen Ausgangsanschluss mit dem Druckanschluss oder einem Tankanschluss verbindbar ist, wobei der Ausgangsanschluss des Engage-Vorsteuerventils (92) mit den Federräumen (94, 96) der Logikventile (84, 86) in den Kreislaufzweigen und mit einem Gehäuseanschluss verbunden ist, den das Motorgehäuse des Hydromotors (6a, 6b) hat und der zum Innenraum des Motorgehäuses offen ist.

6. Hydrostatischer Antrieb nach Patentanspruch 5, wobei in der den Speisedruck führenden Leitung ein Stromventil, insbesondere eine Düse (108) angeordnet ist und wobei zwischen dem Innenraum des Motorgehäuses und einem Arbeitsanschluss des Hydromotors (6a, 6b) ein zu dem Arbeitsanschluss hin öffnendes Rückschlagventil (146) angeordnet ist

7. Hydrostatischer Antrieb nach einem vorhergehenden Patentanspruch, wobei zwischen dem Logikventil (84, 86) in einem Kreislaufzweig und dem Hydromotor (6a, 6b) an jeden Kreislaufzweig mit einem ersten Anschluss ein Entlastungslogikventil (Unload-Logikventil) (110, 112) angeschlossen ist, dessen zweiter Anschluss mit Tank verbunden ist, wobei die beiden Entlastungslogikventile (110, 112) über ein gemeinsames Unload-Vorsteuerventil (114) ansteuerbar sind.

8. Hydrostatischer Antrieb nach Patentanspruch 7, wobei das Unload-Vorsteuerventil (114) in einer Grundstellung einen Federraum (116, 118) der Entlastungs-Logikventile (110, 112) mit Tank und in einer Schaltstellung mit Hochdruck beaufschlagt.

9. Hydrostatischer Antrieb nach Patentanspruch 8, wobei ein Wechselventil (120) vorhanden ist, über das ein Vorsteuerventil (78, 114) mit dem den Hochdruck führenden Kreislaufzweig verbunden wird.

10. Hydrostatischer Antrieb nach einem vorhergehenden Patentanspruch, wobei in der an den Druckanschluss der Speisepumpe (14)angeschlossenen Speiseleitung (32) ein Filter (40) angeordnet ist, dem ein Druckventil (38) zugeordnet ist, das von der Druckdifferenz über dem Filter (40) beaufschlagt ist und dessen in Öffnungsrichtung wirksamer Federraum über ein Speisedrucksteuerventil (46) zum Tank entlastbar ist, und wobei stromabwärts des Filters (40) ein Speisedruckbegrenzungsventil (48) angeordnet ist, das bei einem höheren Druck zum Tank öffnet als das Druckventil (38) bei entlastetem Federraum.

11. Hydrostatischer Antrieb nach einem vorhergehenden Patentanspruch, wobei ein Logikventil (76) in einer Öffnungsstellung pumpenseitig die beiden Kreislaufzweige miteinander verbindet, wobei ein Federraum (80) des Logikventils (76) über ein Clutch-Vorsteuerventil (78) je nach dessen Schaltstellung mit Hochdruck beaufschlagbar und von Druck entlastbar ist.

12. Hydrostatischer Antrieb nach einem vorhergehenden Patentanspruch, wobei die Logikventile (76, 84, 86, 110, 116) und die zugeordneten Vorsteuerventile (78, 92, 114) zu einer baulichen Einheit zusammengefasst sind.

13. Hydrostatischer Antrieb nach einem vorhergehenden Patentanspruch, wobei dieser ein Fahrantrieb für eine Fahrzeugachse ist, bei der jedem Rad (8) ein Hydromotor zugeordnet ist.

14. Hydrostatischer Antrieb nach Patentanspruch 12, mit einem konventionellen Antrieb für die andere Achse.

15. Hydrostatischer Antrieb, nach Patentanspruch 12 oder 13, wobei die Verstellpumpe (10) im Kaltstartmodus in eine Förderrichtung eingestellt ist, die einer Vorwärtsfahrt entspricht.

16. Hydrostatischer Antrieb nach einem vorhergehenden Patentanspruch, wobei das Hubvolumen der Speisepumpe (14) kleiner als das maximale Hubvolumen der verstellbaren Pumpe (10) ist.

## Claims

1. Hydrostatic drive having a pump (10) with an adjustable swept volume, having at least one hydraulic motor (6a, 6b), the operating connectors of which can be connected to operating connectors of the pump (10) in a closed hydraulic circuit via a first circuit branch and a second circuit branch, of which one conducts high pressure and one conducts low pressure in a first operating mode, having a feed pump (14), by which pressure medium can be fed into the circuit branches via a feed line, in which the pressure is limited to a low pressure, having a valve arrangement (4), by way of the switching configuration of which different operating modes can be set, and having an electronic control unit (23), **characterized in that** the electronic control unit (23) is designed in such a way that pressure medium is conveyed by the variable displacement pump (10) from the one circuit branch which is fed by the feed pump (14) into the other circuit branch in a cold starting mode in order to heat pressure medium, the variable displacement pump (10) being swung out as far as the current feed pressure allows, and the valve arrangement (4) being actuated in such a way that the pressure medium which is conveyed by the variable displacement pump (10) is conveyed counter to a hydraulic resistance and is conducted back to the tank while bypassing the hydraulic motor (130).

2. Hydrostatic drive according to Patent Claim 1, the valve arrangement (4), in one operating mode (freewheeling mode), disconnecting the operating connectors of the pump (10) and the hydraulic motor (6a, 6b) from one another, connecting the operating connectors of the pump (10) to one another, and connecting the operating connectors of the hydraulic motor (6a, 6b) to a tank, and, in the said operating mode, pressure medium flowing out of the feed line to a housing connector which the motor housing of the hydraulic motor (6a, 6b) has and which is open towards the interior space of the motor housing, in order to load the interior space of the motor housing with a low pressure, the valve arrangement (4), in a further operating mode (active mode), disconnecting the two operating connectors of the pump (10) from one another and disconnecting the two operating connectors of the hydraulic motor (6a, 6b) from the tank, and connecting the one operating connector of the pump (10) to the one operating connector of the hydraulic motor (6a, 6b) and connecting the other operating connector of the pump (10) to the other operating connector of the hydraulic motor (6a, 6b), and the feed pressure in the feed line being limited to a lower value in the cold starting mode and in the freewheeling mode than in the active mode.

3. Hydrostatic drive according to Patent Claim 2, pressure medium flowing into the interior space of the motor housing in the freewheeling mode via a flow control valve, in particular via a nozzle (108), and a check valve (146) which opens towards the operating connector being arranged between the interior space and an operating connector of the hydraulic motor (6a, 6b).

4. Hydrostatic drive according to Patent Claim 2 or 3, the valve arrangement (4), in another operating mode (standby mode), disconnecting the operating connectors of the hydraulic motor from the tank and connecting them to the operating connectors of the pump (10) and, moreover, connecting the two operating connectors of the pump (10) to one another, and the valve arrangement (4) disconnecting the two operating connectors of the pump (10) from one another in the cold starting mode.

5. Hydrostatic drive according to one of Patent Claims 1 to 4, a two-way cartridge valve (logic valve) (84, 86) being arranged in each circuit branch, which two-way cartridge valve (84, 86) opens the pressure medium connection between an operating connector of the pump (10) and the corresponding operating connector of the hydraulic motor (130) in an open position, the two logic valves (84, 86) in the circuit branches being jointly assigned an engage pilot control valve (92), the pressure connector of which can be connected to a line which conducts the feed pressure, and the outlet connector of which can be connected to the pressure connector or a tank connector, the outlet connector of the engage pilot control valve (92) being connected to the spring spaces (94, 96) of the logic valves (84, 86) in the circuit branches and to a housing connector which the motor housing of the hydraulic motor (6a, 6b) has and which is open towards the interior space of the motor housing.

6. Hydrostatic drive according to Patent Claim 5, a flow control valve, in particular a nozzle (108), being arranged in the line which conducts the feed pressure flows in, and a check valve (146) which opens towards the operating connector being arranged between the interior space of the motor housing and an operating connector of the hydraulic motor (6a, 6b).

7. Hydrostatic drive according to a preceding patent claim, a relief logic valve (unload logic valve) (110, 112) being connected by way of a first connector to each circuit branch between the logic valve (84, 86) in a circuit branch and the hydraulic motor (6a, 6b), the second connector of which relief logic valve (110, 112) is connected to the tank, it being possible for the two relief logic valves (110, 112) to be actuated via a common unload pilot control valve (114).

8. Hydrostatic drive according to Patent Claim 7, the unload pilot control valve (114) loading a spring space (116, 118) of the relief logic valves (110, 112) to tank pressure in a basic position and loading it with high pressure in a switched position.

9. Hydrostatic drive according to Patent Claim 8, there being a shuttle valve (120), via which a pilot control valve (78, 114) is connected to the circuit branch which conducts the high pressure.

10. Hydrostatic drive according to a preceding patent claim, a filter (40) being arranged in the feed line (32) which is connected to the pressure connector of the feed pump (14), which filter (40) is assigned a pressure valve (38) which is loaded by the pressure difference across the filter (40), and the spring space of which, which acts in the opening direction, can be relieved to the tank via a feed pressure control valve (46), and a feed pressure limiting valve (48) being arranged downstream of the filter (40), which feed pressure limiting valve (48) opens to the tank at a higher pressure than the pressure valve (38) in the case of a relieved spring space.

11. Hydrostatic drive according to a preceding patent claim, a logic valve (76) connecting the two circuit branches to one another on the pump side in an open position, it being possible for a spring space (80) of the logic valve (76) to be loaded with high pressure and to be relieved of pressure via a clutch pilot control valve (78) depending on its switched position.

12. Hydrostatic drive according to a preceding patent claim, the logic valves (76, 84, 86, 110, 116) and the associated pilot control valves (78, 92, 114) being combined to form one structural unit.

13. Hydrostatic drive according to a preceding patent claim, the said hydrostatic drive being a traction drive for a vehicle axle, in which each wheel (8) is assigned one hydraulic motor.

14. Hydrostatic drive according to Patent Claim 12, having a conventional drive for the other axle.

15. Hydrostatic drive according to Patent Claim 12 or 13, the variable displacement pump (10) being set in the cold starting mode in a delivery direction which corresponds to forward driving.

16. Hydrostatic drive according to a preceding patent claim, the swept volume of the feed pump (14) being smaller than the maximum swept volume of the adjustable pump (10).

## Revendications

1. Mécanisme d'entraînement hydrostatique comprenant une pompe (10) dont la cylindrée est variable, comprenant au moins un moteur hydraulique (6a, 6b) dont les raccords de travail peuvent être reliés à des raccords de travail de la pompe (10) en un circuit hydraulique fermé par le biais d'une première branche de circuit et d'une deuxième branche de circuit qui, dans un premier mode de fonctionnement, conduisent une haute pression et une basse pression,
comprenant une pompe d'alimentation (14) par laquelle un fluide sous pression peut être injecté dans les branches de circuit par le biais d'une conduite d'alimentation dans laquelle la pression est limitée à une basse pression,
comprenant un arrangement de vannes (4) dont la combinaison de commutations permet de régler différents modes de fonctionnement,
et comprenant une unité de commande électronique (23), **caractérisé en ce que** l'unité de commande électronique (23) est conçue de telle sorte que dans un mode de démarrage à froid, en vue du réchauffage du fluide sous pression, du fluide sous pression est refoulé par la pompe à cylindrée variable (10) depuis l'une des branches de circuit, alimentée par la pompe d'alimentation (14), dans l'autre branche de circuit, la pompe à cylindrée variable (10) étant pivotée vers l'extérieur aussi loin que le permet la pression d'alimentation actuelle et l'arrangement de vannes (4) étant commandé de telle sorte que le fluide sous pression refoulé par la pompe à cylindrée variable (10) est refoulé contre une résistance hydraulique puis est renvoyé vers le réservoir en contournant le moteur hydraulique (130).

2. Mécanisme d'entraînement hydrostatique selon la revendication 1, l'arrangement de vannes (4), dans un mode de fonctionnement (mode de roue libre), déconnectant les uns des autres les raccords de travail de la pompe (10) et du moteur hydraulique (6a, 6b), reliant les uns aux autres les raccords de travail de la pompe (10) et reliant les raccords de travail du moteur hydraulique (6a, 6b) à un réservoir et, dans ce mode de fonctionnement, du fluide sous pression s'écoule depuis la conduite d'alimentation vers un raccord de carter, que possède le carter de moteur du moteur hydraulique (6a, 6b) et qui est ouvert vers l'espace intérieur du carter de moteur, afin de charger l'espace intérieur du carter de moteur avec une basse pression, l'arrangement de vannes (4), dans un mode de fonctionnement supplémentaire (mode actif), déconnectant l'un de l'autre les deux raccords de travail de la pompe (10) et déconnectant du réservoir les deux raccords de travail du moteur hydraulique (6a, 6b) et reliant l'un des raccords de travail de la pompe (10) à l'un des raccords de travail du moteur hydraulique (6a, 6b) et l'autre raccord de travail de la pompe (10) à l'autre raccord de travail du moteur hydraulique (6a, 6b) et, en mode de démarrage à froid et en mode de roue libre, la pression d'alimentation dans la conduite d'alimentation étant limitée à une valeur plus faible que dans le mode actif.

3. Mécanisme d'entraînement hydrostatique selon la revendication 2, selon lequel, en mode de roue libre, du fluide sous pression s'écoule vers l'espace intérieur du carter de moteur par le biais d'une vanne de réglage de débit, notamment par le biais d'une buse (108), et un clapet anti-retour (146) qui s'ouvre vers le raccord de travail est disposé entre l'espace intérieur et un raccord de travail du moteur hydraulique (6a, 6b).

4. Mécanisme d'entraînement hydrostatique selon la revendication 2 ou 3, l'arrangement de vannes (4), dans un autre mode de fonctionnement (mode de veille), déconnectant du réservoir les raccords de travail du moteur hydraulique et les reliant aux raccords de travail de la pompe (10), et en plus de cela, reliant l'un à l'autre les deux raccords de travail de la pompe (10) et l'arrangement de vannes (4), dans le mode de démarrage à froid, déconnectant l'un de l'autre les deux raccords de travail de la pompe (10).

5. Mécanisme d'entraînement hydrostatique selon l'une des revendications 1 à 4, une vanne intégrée à 2 voies (vanne logique) (84, 86) étant intégrée dans chaque branche de circuit, laquelle, dans une position d'ouverture, ouvre la liaison à fluide sous pression entre un raccord de travail de la pompe (10) et le raccord de travail correspondant du moteur hydraulique (130), une vanne pilote d'engagement (92) étant associée aux deux vannes logiques (84, 86) en commun dans les branches de circuit, dont le raccord de pression peut être relié à une conduite qui conduit la pression d'alimentation et dont le raccord de sortie peut être relié au raccord de pression ou à un raccord de réservoir, le raccord de sortie de la vanne pilote d'engagement (92) étant relié aux espaces de ressort (94, 96) des vannes logiques (84, 86) dans les branches de circuit et à un raccord de carter, que possède le carter de moteur du moteur hydraulique (6a, 6b) et qui est ouvert vers l'espace intérieur du carter de moteur.

6. Mécanisme d'entraînement hydrostatique selon la revendication 5, une vanne de réglage de débit, notamment une buse (108), étant disposée dans la conduite qui conduit la pression d'alimentation alimente et un clapet anti-retour (146) qui s'ouvre vers le raccord de travail est disposé entre l'espace intérieur du carter de moteur et un raccord de travail du moteur hydraulique (6a, 6b).

7. Mécanisme d'entraînement hydrostatique selon l'une des revendications précédentes, une vanne logique de décharge (110, 112) étant raccordée à un premier raccord au niveau de chaque branche logique entre la vanne logique (84, 86) dans une branche de circuit et le moteur hydraulique (6a, 6b), le deuxième raccord de celle-ci étant relié au réservoir, les deux vannes logiques de décharge (110, 112) pouvant être commandées par le biais d'une vanne pilote de décharge (114) commune.

8. Mécanisme d'entraînement hydrostatique selon la revendication 7, la vanne pilote de décharge (114), dans une position de base, alimentant un espace de pression (116, 118) des vannes logiques de décharge (110, 112) depuis le réservoir et, dans une position commutée, avec de la haute pression.

9. Mécanisme d'entraînement hydrostatique selon la revendication 8, une vanne de sélection (120) étant présente, par le biais de laquelle une vanne pilote (78, 114) est reliée à la branche de circuit qui conduit la haute pression.

10. Mécanisme d'entraînement hydrostatique selon l'une des revendications précédentes, un filtre (40) étant disposé dans la conduite d'alimentation (32) raccordée au raccord de pression de la pompe d'alimentation (14), auquel est associée une soupape de refoulement (38) qui est sollicitée par la différence de pression de part et d'autre du filtre (40) et dont l'espace de ressort actif dans le sens de l'ouverture peut être déchargé vers le réservoir par le biais d'une vanne pilote de pression d'alimentation (46), et une vanne de limitation de la pression d'alimentation (48) étant disposée en aval du filtre (40), laquelle s'ouvre vers le réservoir à une pression plus élevée que la soupape de refoulement (38) lorsque l'espace de ressort est déchargé.

11. Mécanisme d'entraînement hydrostatique selon l'une des revendications précédentes, une vanne logique (76) dans une position d'ouverture côté pompe reliant l'une à l'autre les deux branches de circuit, un espace de ressort (80) de la vanne logique (76) pouvant être chargé en haute pression et déchargé de la pression par le biais d'une vanne pilote d'embrayage (78) en fonction de sa position de commutation.

12. Mécanisme d'entraînement hydrostatique selon l'une des revendications précédentes, les vannes logiques (76, 84, 86, 110, 116) et les vannes pilotes (78, 92, 114) associées étant regroupées en une unité structurale.

13. Mécanisme d'entraînement hydrostatique selon l'une des revendications précédentes, celui-ci étant un mécanisme d'entraînement de marche pour un essieu de véhicule avec lequel un moteur hydraulique est associé à chaque roue (8).

14. Mécanisme d'entraînement hydrostatique selon la revendication 12, comprenant un mécanisme d'entraînement conventionnel pour les autres essieux.

15. Mécanisme d'entraînement hydrostatique selon la revendication 12 ou 13, la pompe à cylindrée variable (10), en mode de démarrage à froid, étant réglée dans une direction de refoulement qui correspond à une marche avant.

16. Mécanisme d'entraînement hydrostatique selon l'une des revendications précédentes, la cylindrée de la pompe d'alimentation (14) étant inférieure à la cylindrée maximale de la pompe réglable (10).
